# EUROPEAN PATENT APPLICATION

(11) **EP 1 416 605 A1**
(43) Date of publication of application: **06.05.2004**
(21) Application number: 03015201.1
(22) Date of filing: 04.07.2003
(51) Int. Cl.: H02J 7/00, H02J 7/04, G06F 1/26

(54) **Electronic device**

(30) Priority: 01.11.2002 JP 2002320101
(71) Applicant: Kabushiki Kaisha Toshiba, Tokyo (JP)
(72) Inventor: Nakamura, Koji, 1-1-1 Shibaura, Minato-ku Tokyo 105-8001 (JP)
(74) Representative: Henkel, Feiler & Hänzel

(57) **Abstract**

An electronic device includes a battery (2), a control unit (13) having the first mode in which the battery is charged up to a fully charged state and the second mode in which the battery is charged up to a state less charged than the fully charged state, a unit (11) which detects that the battery has been charged up to the fully charged state in the first mode, and a unit (11, 31) which switches control of the control unit from the first mode to the second mode when the battery is detected to have been charged up to the fully charged state.

## Description

The present invention relates to an electronic device having a battery.

Along with recent downsizing of portable electronic devices such as a personal computer, techniques for secondary batteries such as a lithium-ion battery used in the mobile environment have been developed.

As is well known, the battery capacity of the lithium-ion battery gradually drops if the battery is left in a fully charged state or almost fully charged state. Especially when the lithium-ion battery is left in a high-temperature environment, the battery capacity greatly decreases. A discharge cycle life which starts from a state less charged than the fully charged state becomes much longer than a discharge cycle life from the fully charged state.

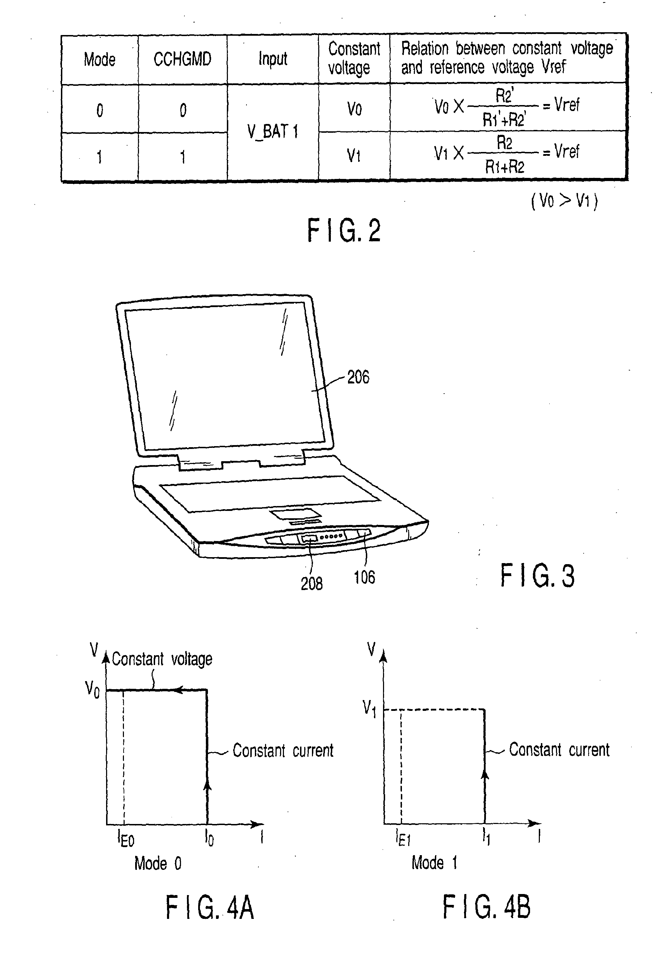

As a technique which exploits this characteristic, a technique of switching a battery by a switch between a mode in which the battery is charged up to the fully charged state and a mode in which the battery is charged to a state less charged than the fully charged state is disclosed (Jpn. Pat. Appln. KOKAI Publication No. 2002-78222, (sixth paragraph, FIG. 3)).

According to the above technique, when the battery is temporarily switched by the switch from the mode (second mode) in which the battery is charged to a state less charged than the fully charged state to the mode (first mode) in which the battery is charged up to the fully charged state, the battery cannot return to the mode in which the battery is charged to a state less charged than the fully charged state unless the mode is switched by the switch again.

If the user forgets to switch the battery to the second mode after switching the battery from the second mode to the first mode, the battery is always charged in the first mode, degrading the battery performance.

According to the present invention, there is provided an electronic device comprising a battery, control means having a first mode in which the battery is charged up to a fully charged state and a second mode in which the battery is charged up to a state less charged than the fully charged state, means for detecting that the battery has been charged up to the fully charged state in the first mode, and means for switching control of the control means from the first mode to the second mode when the battery is detected to have been charged up to the fully charged state.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the battery charging apparatus of a notebook type personal computer and its peripheral circuit according to an embodiment of the present invention;
FIG. 2 is a table showing the relationship between the mode and a value at each portion of a mode switching circuit 51;
FIG. 3 is a view showing the attaching positions of a full charge button 106, sub-LCD 208, and LCD 206;
FIGS. 4A and 4B are graphs for explaining charging methods in modes 0 and 1;
FIG. 5 is a graph for explaining the charging methods in modes 0 and 1;
FIG. 6 is a view showing the display of the remaining battery amount;
FIG. 7 is a flow chart for explaining processing when a personal computer is OFF and the full charge button is pressed;
FIG. 8 is a flow chart for explaining a method of fully charging a battery by software; and
FIG. 9 is a view showing a window for selecting a charge mode by software.

An electronic device according to a preferred embodiment of the present invention will be described below with reference to the several views of the accompanying drawing.

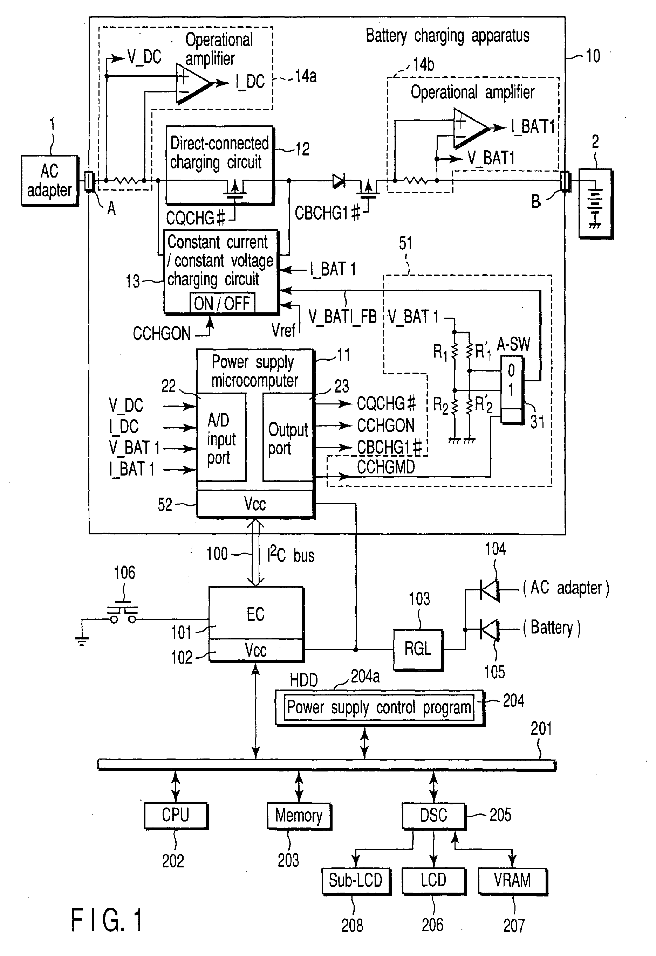

FIG. 1 is a block diagram showing the battery charging apparatus of a notebook type personal computer and its peripheral circuit according to the embodiment of the present invention.

As shown in FIG. 1, a battery charging apparatus 10 according to the embodiment charges a battery 2 by an AC adapter 1 connected via connector A. The battery charging apparatus 10 comprises a power supply microcomputer 11, direct-connected charging circuit 12, constant current/constant voltage charging circuit 13, sampling units 14a and 14b, and charge mode switching circuit 51.

The AC adapter 1 connected via connector A has a constant current mode in which power is kept supplied at a rated current value, and a constant voltage mode in which power is kept supplied at a rated voltage value. The AC adapter 1 keeps supplying power in the constant current mode until an applied voltage value reaches a predetermined limit value. After the applied voltage value reaches the predetermined limit value, the AC adapter 1 keeps supplying power in the constant voltage mode. The constant voltage mode is set also when the current supplied by the AC adapter 1 is smaller than the ranted current value. Connector A allows inserting the DC IN terminals of a plurality of types of AC adapters with different ratings. The battery charging apparatus 10 supports an AC adapter with a rated current value of 3 A and a rated voltage value of 15 V herein.

The power supply microcomputer 11 controls the overall battery charging apparatus 10, and decides a charging method on the basis of the current value and voltage value at each portion that are sampled by the sampling units 14a and 14b to be described later. The power supply microcomputer 11 has a function of detecting whether the AC adapter 1 which is effective as an external power supply has been connected to connector A.

The power supply microcomputer 11 has a power supply 52. Even if the computer is OFF, the power supply 52 can receive power from the AC adapter 1 or battery 2 via a rectifier 104 or 105 and a regulator 103, and operate the power supply microcomputer 11.

The power supply microcomputer 11 outputs control signals (CQCHG#, CCHGON, CBCHG1#, and CCHGMD) from an output port 23 on the basis of a communication command from an EC (Embedded Controller) 101 via an I²C bus 100 and signals (V_DC, I_DC, V_BAT1, and I_BAT1) input to an A/D input port 22.

The control signal CCHGMD output from the output port 23 of the power supply microcomputer 11 generally keeps a CCHGMD signal at logical value "1". When the EC 101 inputs via the I²C bus 100 a communication command representing that a full charge button 106 is pressed or the system has issued a mode switching request, the control signal CCHGMD changes the CCHGMD signal to logical value "0".

The direct-connected charging circuit 12 is interposed between the AC adapter 1 and the main battery 2. The direct-connected charging circuit 12 directly connects or disconnects the AC adapter 1 and battery 2 on the basis of the control signal (CQCHG#) transmitted from the power supply microcomputer 11.

Similar to the direct-connected charging circuit 12, the constant current/constant voltage charging circuit 13 is interposed parallel to the direct-connected charging circuit 12 between the AC adapter 1 and the battery 2. The constant current/constant voltage charging circuit 13 so functions as to execute charging of the battery 2 by the AC adapter 1 at a current value falling within a predetermined range. The constant current/constant voltage charging circuit 13 also has the constant current mode in which power is kept supplied at a predetermined current value, and the constant voltage mode in which power is kept supplied at a predetermined voltage value. The constant current/constant voltage charging circuit 13 keeps outputting power in the constant current mode until an applied voltage value reaches a predetermined limit value. After the applied voltage value reaches the predetermined limit value, the constant current/constant voltage charging circuit 13 keeps outputting power in the constant voltage mode. The constant current/constant voltage charging circuit 13 becomes effective when the power supply microcomputer 11 transmits the control signal (CCHGON).

In charging in the constant voltage mode, the constant current/constant voltage charging circuit 13 charges the battery 2 in a mode complying with a feedback voltage V_BAT1_FB output from the charge mode switching circuit 51. The constant current/constant voltage charging circuit 13 executes charging control of the constant voltage mode so as to make the feedback voltage V_BAT1__FB equal to a reference voltage Vref.

More specifically, when the charge mode switching circuit 51 outputs the feedback voltage V_BAT1_FB = V_BAT1 × (R₂'/(R₁' + R₂')) corresponding to mode 0 (full charge mode), a battery voltage V₀ in the low-voltage mode of the battery 2 becomes V₀ = Vref × (1 + R₁'/R₂') because the feedback voltage is controlled to V_BAT1_FB Vref.

When the charge mode switching circuit 51 outputs the feedback voltage V_BAT1_FB = V_BAT1 × (R₂/(R₁ + R₂)) corresponding to mode 1, a battery voltage V₁ in the low-voltage mode of the battery 2 becomes V₁ = Vref × (1 + R₁/R₂).

FIGS. 4A and 4B are graphs for explaining charging methods in modes 0 and 1.

In mode 0 (full charge mode), charging starts at a constant current I₀. When the voltage of the battery 2 reaches V₀, charging is switched to charging at the constant voltage V₀. When the charging current reaches IE₀, charging ends. In mode 1 (charge mode less than full charging), charging starts at a constant current I₁. When the battery voltage reaches V₁, the voltage is switched to a constant charging voltage. When the charging current reaches IE₁, charging ends. At this time, the power supply microcomputer 11 returns the CCHGMD signal from logical value "0" to logical value "1", thereby returning the charge mode from mode 0 to mode 1. Note that I₀ = I₁ and IE₀ = IE₁ are desirable, and V₀ > V₁. The power supply microcomputer 11 generally outputs logical value "1".

This can prevent inadvertent wear of the battery because the personal computer automatically returns to an original charge mode even if the user forgets to return the mode to an original one.

The direct-connected charging circuit 12 and constant current/constant voltage charging circuit 13 are controlled by the power supply microcomputer 11 such that the function of the constant current/constant voltage charging circuit 13 is invalidated when the direct-connected charging circuit 12 directly connects the AC adapter 1 and battery 2, and validated when the direct-connected charging circuit 12 disconnects the AC adapter 1 and battery 2. In an initial state, the direct-connected charging circuit 12 directly connects the AC adapter 1 and battery 2, and the function of the constant current/constant voltage charging circuit 13 is invalid.

The sampling units 14a and 14b detect current value and voltage value at a portion to be sampled, and notifies the power supply microcomputer 11 of them. More specifically, the sampling unit 14a detects the rated current value of the AC adapter 1, and the sampling unit 14b accumulates the actual charging capacity of the battery 2.

The charge mode switching circuit 51 outputs a predetermined feedback voltage V_BAT1_FB on the basis of the logical value of CCHGMD output from the power supply microcomputer 11. More specifically, two different divided voltages of an actual charging voltage V_BAT1 of the battery 2 are switched by a switch 31 on the basis of the logical value of CCHGMD.

FIG. 2 is a table showing the relationship between the mode and a value at each portion of the mode switching circuit 51. As shown in FIG. 2, for the logical value of the CCGMD signal = "0", mode 0 is set, the input is the actual voltage V_BAT1 of the battery 2, the feedback voltage V_BAT1__FB as an output from the mode switching circuit 51 is V_BAT1 (= V₀× R₂'/(R₁' + R₂')), and the charging voltage in the constant voltage mode of the battery is V₀.

For the logical value of the CCGMD signal = "1", mode 1 is set, the input is the actual voltage V_BAT1 of the battery 2, the feedback voltage V_BAT1_FB as an output from the mode switching circuit 51 is V BAT1 (= V₀ × R₂/(R₁ + R₂)), and the charging voltage in the constant voltage mode of the battery is V₁. In this case, V₀ > V₁.

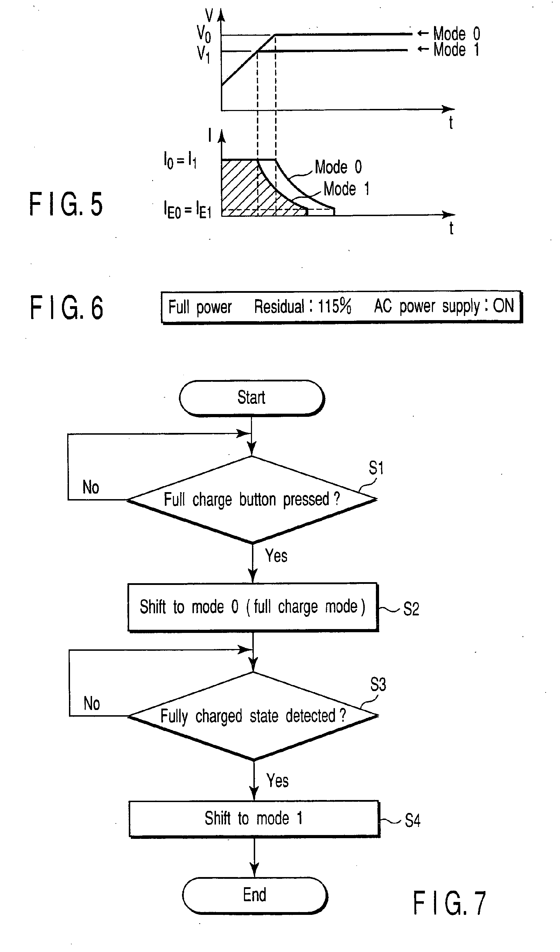

In the embodiment of the present invention, assuming that the battery charging efficiency is 100%, the charging capacity of the battery 2 is represented by the area of a graph with an abscissa I and ordinate t shown in FIG. 5. In mode 1, the area (hatched portion) is set to 85% the area in mode 0.

The EC 101 has a power supply 102. Even if the computer is OFF, the power supply 102 can receive power from the AC adapter 1 or battery 2 via the rectifier 104 or 105 and the regulator 103, and operate the EC 101.

The EC 101 notifies the power supply microcomputer 11 of an event representing that the full charge button 106 has been pressed, and a mode event from the system. The EC 101 is connected to an internal bus 201.

The internal bus 201 is connected to a CPU 202, memory 203, HDD (Hard Disk Drive) 204, and DSC (Display Controller) 205. The DSC 205 is connected to an LCD (Liquid Crystal Display) 206, VRAM (Video RAM) 207, and sub-LCD (sub-Liquid Crystal Display) 208.

The CPU 202 controls the whole notebook type personal computer. The CPU 202 executes a power supply control program according to the embodiment of the present invention to control the battery 2.

The memory 203 is used to store data and as a work area for an application program.

The HDD 204 stores a power supply control program 204a according to the embodiment of the present invention, various application programs, and the like.

The display controller (DSC) 205 controls the displays of the LCD 206 and sub-LCD 208. The VRAM 207 is a memory used for display processing by the DSC 205.

FIG. 3 is a view showing the attaching positions of the full charge button 106, sub-LCD 208, and LCD 206. As shown in FIG. 3, the full charge button 106 according to the embodiment of the present invention is arranged on the surface of the housing of the notebook type personal computer, and can be operated even when the LCD 206 is closed.

The operation of the personal computer according to the embodiment of the present invention will be described.

Processing when the personal computer is OFF and the full charge button is pressed will be explained with reference to the flow chart of FIG. 7.
The initial state is mode 1.

Whether the full charge button has been pressed is decided (S1). This processing can be done because the EC 101 and power supply microcomputer 11 receive power even when the notebook type personal computer is OFF, as described above.

If YES in S1, the personal computer shifts from mode 1 to mode 0 (full charge mode). More specifically, the power supply microcomputer 11 changes the CCHGMD signal from logical value "1" to logical value "0" on the basis of a control signal which is output from the EC 101 and represents that the full charge button 106 has been pressed. The power supply microcomputer 11 switches the charging method of the constant current/constant voltage charging circuit 13 from mode 1 to mode 0 (S2).

As a result, the battery 2 is charged up to the fully charged state. In S3, whether the battery 2 is in the fully charged state is decided. If YES in S3, the personal computer shifts from mode 0 (full charge mode) to mode 1 (S4).

More specifically, if the fully charged state is detected, the power supply microcomputer 11 changes the CCHGMD signal from logical value "0" to logical value "1", and switches the charging method of the constant current/constant voltage charging circuit 13 from mode 0 to mode 1. This can prevent battery degradation because the personal computer automatically returns from mode 0 to mode 1 even if the user erroneously presses the full charge button.

Processing of changing the charging method of the battery 2 by software when the personal computer is ON will be explained.

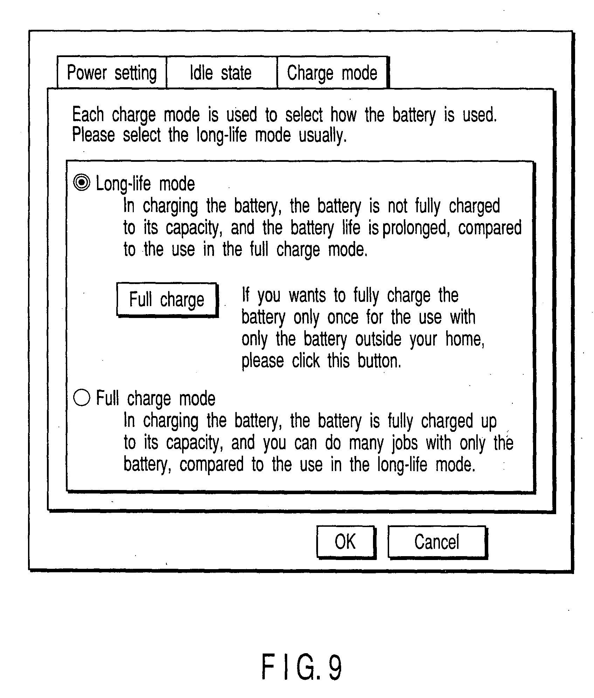

In the embodiment of the present invention, a window for selecting a charge mode by the power supply control program 204a is displayed, as shown in FIG. 9.

For example, when "full charge mode" is selected in the window shown in FIG. 9, the power supply microcomputer sets the CCHGMD signal to logical value "0", and operates the constant current/constant voltage charging circuit 13 in mode 0. The "full charge mode" is kept unchanged until the user resets the mode. When the full charge mode is selected, the charge mode does not change even if the user presses the full charge button.

When "long-life mode" is selected in the window shown in FIG. 9, the power supply microcomputer sets the CCHGMD signal to logical value "1", and operates the constant current/constant voltage charging circuit 13 in mode 1. The "long-life mode" is similarly kept unchanged until the user resets the mode. When the "long-life mode" is selected, processing of switching from mode 1 to mode 0 (full charge mode) when the full charge button is pressed, and returning from mode 0 to mode 1 when the fully charged state is detected is performed, as described with reference to the flow chart of FIG. 7. Also when a "full charge" icon is clicked in the window shown in FIG. 9, the same processing as that performed upon press of the full charge button is executed.

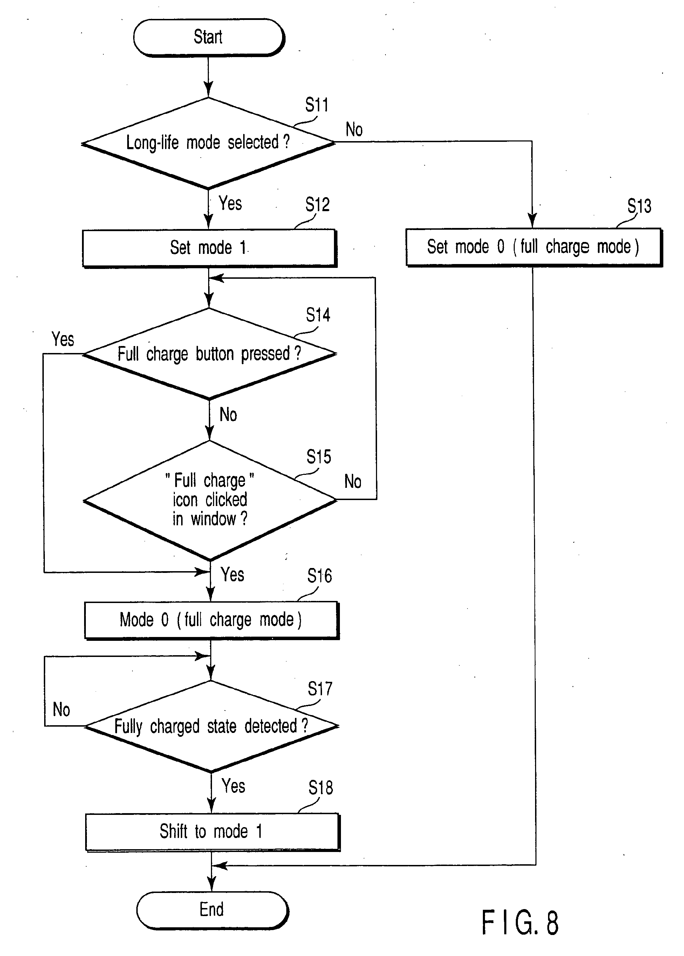

A method of fully charging the battery by software will be explained with reference to the flow chart of FIG. 8.

Whether the user has selected the long-life mode is decided (S11). If YES in S11, mode 0 (full charge mode) is set (S13).

More specifically, the CCHGMD signal is changed to logical value "0" on the basis of a communication command which is transmitted from the EC 101 to the power supply microcomputer 11 via the I²C bus and represents the "full charge mode". As a result, the charging method of the constant current/constant voltage charging circuit 13 changes to mode 0.

If NO in S11, mode 1 is set (S12). More specifically, the CCHGMD signal is changed to logical value "1" on the basis of a communication command which is transmitted from the EC 101 to the power supply microcomputer 11 via the I²C bus and represents the "long-life mode". The charging method of the constant current/constant voltage charging circuit 13 then changes to mode 1.

If the long-life mode is selected, whether the full charge button has been pressed (S14) and whether the "full charge" icon in the window has been clicked (S15) are decided. If either condition is established, the charging method of the constant current/constant voltage charging circuit 13 is switched from mode 1 to mode 0 on the basis of a "full charge mode switching" communication command which is transmitted from the EC 101 to the power supply microcomputer 11 via the I²C bus (S16).

Consequently, the battery 2 is charged up to the fully charged state. In S17, whether the battery 2 is in the fully charged state is decided. If YES in S17, the personal computer shifts from mode 0 (full charge mode) to mode 1 (S18).

More specifically, if the fully charged state is detected, the power supply microcomputer 11 changes the CCHGMD signal from logical value "0" to logical value "1", and switches the charging method of the constant current/constant voltage charging circuit 13 from mode 0 to mode 1. This can prevent battery degradation because the personal computer automatically returns from mode 0 to mode 1 even if the user erroneously presses the full charge button.

In the above-described embodiment, the power supply control program displays the remaining amount of the battery 2. The display of the remaining amount of the battery 2 is calculated on the assumption that the electricity accumulation amount upon the completion of charging in mode 1 is 100% even in mode 0. The remaining battery amount is displayed as a value larger than 100%, as shown in FIG. 6. The user can be easily notified of the effect of pressing the full charge button by the user and the effect of selecting the long-life mode.

Depending on the user's purpose, for example, he/she goes out with a computer everyday. Considering such case, a means for forcibly changing the computer to mode 0 is adopted.

For example, if the "full charge mode" is selected in the window shown in FIG. 9, the power supply microcomputer changes the CCHGMD signal to logical value "0", and operates the constant current/constant voltage charging circuit 13 in mode 0. The "full charge mode" is kept unchanged until the user resets the mode. Even if the user presses the full charge button when the full charge mode is selected, only charging starts and the mode does not change.

In order to prevent the battery from erroneously shifting to the full charge state, a means for invalidating the full charge button may be arranged.

The present invention is not limited to the above embodiment, and can be variously modified without departing from the spirit and scope of the invention in practical use.

## Claims

1. An electronic device **characterized by** comprising:
a battery (2);
control means (13) having a first mode in which the battery is charged up to a fully charged state and a second mode in which the battery is charged up to a state less charged than the fully charged state;
means (11) for detecting that the battery is charged up to the fully charged state in the first mode; and
means (31) for switching control of the control means from the first mode to the second mode when the battery is detected to have charged up to the fully charged state.

2. A device according to claim 1, which further comprises a button which is operated even when the electronic device is OFF, and in which the button is operated to start charging the battery in the first mode by the control means.

3. A device according to claim 2, **characterized in that** the button is attached to a surface of a housing of the electronic device.

4. A device according to claim 1, **characterized by** further comprising a user interface which causes the control means to start charting the battery in the first mode.

5. A device according to claim 1, which further comprises means for displaying a remaining amount of the battery, and in which the display means displays the remaining amount of the battery by using a charged state in the second mode as a reference.
